(19) **Europäisches Patentamt / European Patent Office / Office européen des brevets**

(11) **EP 3 657 200 B1**

(12) **FASCICULE DE BREVET EUROPEEN**

(45) Date de publication et mention de la délivrance du brevet:
**30.08.2023   Bulletin 2023/35**

(21) Numéro de dépôt: **19210990.8**

(22) Date de dépôt: **22.11.2019**

(51) Classification Internationale des Brevets (IPC):
*G01S 7/292* (2006.01)   *G01S 13/72* (2006.01)
*G01S 13/42* (2006.01)   *G01S 13/50* (2006.01)

(52) Classification Coopérative des Brevets (CPC):
**G01S 7/2926; G01S 7/2923; G01S 13/426;**
**G01S 13/50; G01S 13/726**

(54) **PROCÉDÉ DE DÉTECTION PAR INTÉGRATION LONGUE ET SYSTÈME RADAR CORRESPONDANT**

ERKENNUNGSVERFAHREN DURCH LANGZEITINTEGRATION, UND ENTSPRECHENDES RADARSYSTEM

DETECTION METHOD BY LONG INTEGRATION AND CORRESPONDING RADAR SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **23.11.2018   FR 1871763**

(43) Date de publication de la demande:
**27.05.2020   Bulletin 2020/22**

(73) Titulaire: **Thales**
**92400 Courbevoie (FR)**

(72) Inventeurs:
• **BRETON, Pierre-Albert**
  **33700 MERIGNAC (FR)**
• **CORRETJA, Vincent**
  **33700 MERIGNAC (FR)**
• **MONTIGNY, Richard**
  **33700 MERIGNAC (FR)**
• **KEMKEMIAN, Stéphane**
  **78851 ELANCOURT (FR)**

(74) Mandataire: **Lavoix**
**2, place d'Estienne d'Orves**
**75441 Paris Cedex 09 (FR)**

(56) Documents cités:
FR-A1- 2 974 421      US-A1- 2005 264 438
US-A1- 2014 361 919   US-A1- 2017 242 095

**Description**

La présente invention concerne un procédé de détection de cibles, en exploitant plusieurs balayages successifs d'un même espace et en utilisant un modèle cinématique du déplacement desdites cibles. Plus particulièrement, l'invention concerne un système radar mobile, naval ou aéroporté, de détection de cibles maritimes, notamment de petites cibles, c'est-à-dire de cibles présentant une faible Surface Equivalente Radar (SER).

A cause du fouillis de mer (« clutter » en anglais), la détection de petites cibles reste difficile.

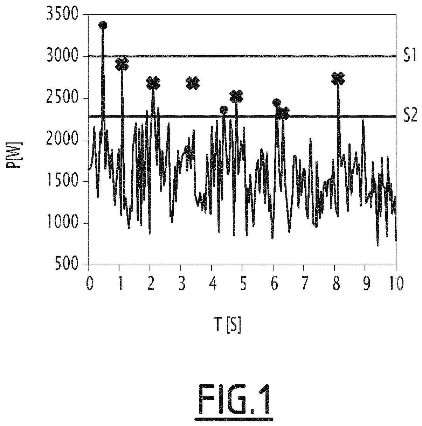

En effet, comme représenté sur la figure 1, le système radar établit un ensemble de détections à partir des échos reçus de l'espace observé. Une détection se caractérise par le franchissement d'un seuil de détection prédéfini, soit manuellement par l'opérateur, soit par un dispositif automatique de positionnement adaptatif de la valeur de ce seuil.

Cependant, lorsque le niveau du signal réfléchi par une cible (indiquée par un rond sur la figure 1) est faible par rapport au niveau des nombreuses impulsions du fouillis de mer (indiquée par une croix sur la figure 1), si le seuil de détection est placé à une valeur haute, par exemple S1 sur la figure 1, pour éviter de considérer les impulsions parasites comme des détections, alors une petite cible ne sera pas détectée. En revanche, si le seuil de détection est placé à une valeur basse (S2 sur la figure 1), alors les détections associées à des cibles sont noyées parmi le grand nombre de détections associées à des impulsions parasites. Les détections formées correspondent donc soit uniquement aux cibles présentant un SER élevée, soit à toutes les cibles et à de nombreuses fausses alarmes liées aux impulsions du fouillis de mer.

Des techniques ont été développées pour tenter de surmonter cette difficulté, notamment des techniques dites d'intégration longue, qui permettent de positionner le seuil de détection beaucoup plus bas (et donc d'augmenter la probabilité de détection des cibles de faible SER) tout en conservant un taux de fausse alarme (TFA) inchangé.

Pour cela, la technique d'intégration longue exploite plusieurs balayages successifs d'un même espace, en recherchant les détections qui, parmi l'ensemble des détections formées, sont compatibles avec un modèle cinématique de déplacement d'une cible. Si ce traitement permet d'identifier un groupe suffisant de détections cohérentes entre elles, une cible est détectée. Ce traitement élimine un grand nombre de fausses alarmes, car celles-ci sont incohérentes cinématiquement.

Le document FR 2 974 421 décrit ainsi un filtrage cinématique qui permet, après avoir replacé les détections des différents balayages successifs dans un repère commun, de réaliser un filtrage des détections formées en se fondant sur un modèle cinématique du mouvement d'une cible, par opposition au fouillis de mer. Le modèle cinématique utilisé est un mouvement rectiligne uniforme, la distance d'une cible au radar devant présenter une progression linéaire au cours des balayages successifs de l'antenne.

Ce procédé de vérification de la cohérence cinématique de l'état de la technique bien qu'efficace, présente les inconvénients suivants :

- La vérification cinématique s'appuie sur une seule coordonnée, la coordonnée de distance. De ce point de vue la cohérence cinématique n'est pas vérifiée strictement puisqu'il faut au moins deux paramètres pour décrire une trajectoire plane.
- Le procédé comprend plusieurs étapes impliquant chacune des tests et des métriques spécifiques. Il en résulte une perte d'efficacité calculatoire et un paramétrage complexe et difficile à adapter à divers scénario d'emploi.
- La complexité calculatoire du procédé est quadratique.
- Le procédé est adapté aux cibles lentes, dont la vitesse selon la coordonnée de distance est typiquement inférieure à 10 m/s.
- Le procédé est spécifique des antennes radar rotatives.

Le but de cette invention est de résoudre ces problèmes.

Pour cela l'invention a pour objet un procédé de détection par intégration longue mis en oeuvre par un système radar pour la détection de cibles, le système radar étant propre à délivrer des mesures selon au moins une coordonnée, ledit procédé prenant en entrée une pluralité de détections résultant d'une pluralité de N balayages successifs d'un même espace par le système radar, et identifiant, parmi ladite pluralité de détections, les détections associées à une même cible par application d'un critère de filtrage cinématique fondé sur un modèle cinématique de mouvement selon lequel les cibles ont un mouvement rectiligne uniforme, caractérisé en ce que ledit procédé est mis en oeuvre à chaque nouvelle détection, dénommée détection pivot, et comporte les étapes consistant à : regrouper, avec la détection pivot, une pluralité de détections regroupées parmi la pluralité de détections, une détection regroupée étant une détection qui appartient à un des N-1 balayages précédant le balayage N de la détection pivot et qui a une probabilité non nulle selon un critère de regroupement associant la détection pivot et la détection considérée ; filtrer cinématiquement les détections regroupées pour associer les détections regroupées qui sont strictement cohérentes cinématiquement avec la détection pivot, en : Initialisant un histogramme, chaque dimension de l'histogramme étant une variation temporelle d'une coordonnée correspondante mesurée par système radar ; Calculant un intervalle de valeurs potentielles pour la ou chaque coordonnée de la détection pivot ; puis, pour chaque détection regroupée, en : Calculant un intervalle de valeurs potentielles pour la ou chaque coordonnée de la détection regroupée considérée ; Calculant une variation temporelle minimale et une variation temporelle maximale à partir des intervalles de valeurs potentielles de la détection pivot et de la détection regroupée considérée pour la ou chaque coordonnée mesurée par système radar ; Incrémentant l'ensemble des classes de l'histogramme dont l'index selon chaque dimension se situe entre les variations temporelles minimale et maximale calculées ; et, Testant un critère de cohérence cinématique selon lequel une cible est détectée dès qu'au moins une classe de l'histogramme atteint une valeur prédéfinie.

Suivant des modes particuliers de réalisation, le procédé comporte une ou plusieurs des caractéristiques suivantes, prises isolément ou suivant toutes les combinaisons techniquement possibles :

- lorsque ladite au moins une coordonnée que le système radar mesure comporte une position, la variation temporelle correspondante est une pente ; et, lorsque ladite au moins une coordonnée que le système radar mesure comporte une vitesse, la variation temporelle correspondante est une vitesse.
- lorsque ladite position est une position en azimut, la variation temporelle est une pente en azimut ; et, lorsque ladite position est une position en distance, la variation temporelle est une pente en distance.
- le critère de regroupement associant la détection pivot et la détection considérée est la distance entre la détection pivot et la détection considérée, les détections dont la distance est inférieure à une distance de référence étant regroupées avec la détection pivot.
- la cible est une petite cible.

L'invention a également pour objet un système radar comportant un étage d'analyse propre à mettre en oeuvre le procédé de détection par intégration longue précédent.

Suivant des modes particuliers de réalisation, le système radar comporte une ou plusieurs des caractéristiques suivantes, prises isolément ou suivant toutes les combinaisons techniquement possibles :

- le système radar comporte une antenne radar tournante ou à balayage électronique.
- le système radar est destiné à être embarqué sur une plateforme, le système radar étant mobile.
- le système radar est dédié à la surveillance maritime.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :

[Fig 1] La figure 1 est un graphe de la puissance reçue en fonction du temps ;
[Fig 2] La figure 2 est une représentation d'un mode de réalisation préféré d'un système radar mettant en oeuvre le procédé de détection par intégration longue selon l'invention ;
[Fig 3] La figure 3 est un graphe représentant les détections formées au cours de N balayages successifs en fonction de leur coordonnée de distance ;
[Fig 4] La figure 4 est une représentation schématique sous forme de blocs d'un mode de réalisation préféré du procédé de détection par intégration longue selon l'invention ;
[Fig 5] La figure 5 est un graphe illustrant la notion d'intervalles de valeurs possibles pour la coordonnées de distance et celle de pente maximale et minimale, notions utilisées dans le procédé de la figure 4 ; et,
[Fig 6] La figure 6 est un histogramme selon les dimensions de pente en azimut et de pente en distance utilisé dans le procédé de la figure 4.

CONTEXTE DE MISE EN OEUVRE

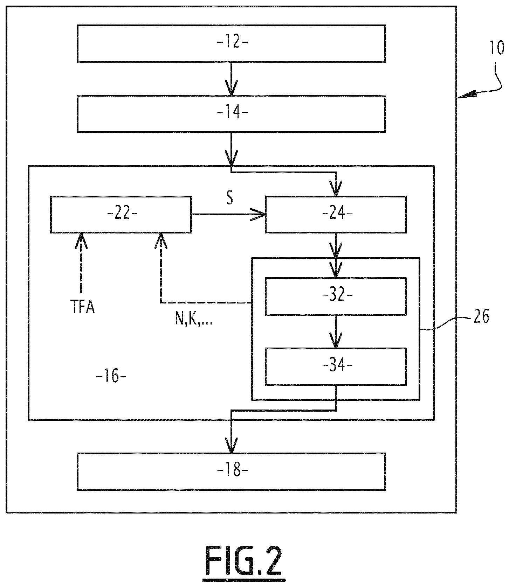

La figure 2 représente un mode de réalisation possible d'un système radar mettant en oeuvre le procédé de détection selon l'invention.

Le système radar 10, de préférence aéroporté, a pour fonction d'analyser un espace maritime afin d'y détecter des cibles se déplaçant à la surface de l'eau, notamment des « petites » cibles, définies comme des objets présentant une faible réflexivité, ou SER réduite.

Le système radar 10 comporte une antenne radar 12. Il peut s'agir d'une antenne tournante à balayage mécanique. Il peut également s'agir d'une antenne à balayage électronique. Dans ce dernier cas, les instants de balayage successifs à considérer peuvent être espacés régulièrement ou irrégulièrement dans le temps. L'antenne radar 12 délivre, à partir des échos reçus depuis les réflecteurs éclairés, un signal électrique.

Le système radar 10 comporte un premier étage de traitement 14, qui est associé à l'antenne radar 12 et permet de produire un échantillonnage en distances à partir du signal en sortie de l'antenne. L'échantillonnage est constitué d'une pluralité d'échantillons.

Le système radar 10 comporte un second étage d'analyse 16, qui est propre à analyser l'échantillonnage en sortie du premier étage 14, pour en extraire des cibles éventuelles sous la forme de « plots ».

Le système radar 10 comporte un troisième étage de pistage 18, qui utilise chaque plot produit en sortie du second étage 16 pour réaliser un suivi de la cible correspondante.

Les blocs de la chaîne d'analyse 16 sont les suivants :

- un bloc 22 de calcul d'un seuil de détection : le seuil de détection S dépend des caractéristiques du procédé de détection par intégration longue mis en oeuvre dans le bloc 26 (en particulier le paramètre N du nombre de balayages successifs pris en compte, le paramètre K du nombre de détections cinématiquement cohérentes pour constituer un plot, le modèle cinématique mis en oeuvre, etc.) ainsi que du taux de fausses alarmes - TFA - attendu en sortie du second étage d'analyse 16. La valeur du seuil de détection concrétise le gain obtenu grâce au procédé de détection par intégration longue mis en oeuvre.

- un bloc 24 de traitement du signal : ce bloc met en oeuvre un traitement usuel, dont le rôle est de former des détections à partir de la pluralité d'échantillons. Ce traitement comporte les étapes génériques suivantes : construction d'un évènement par post intégration cohérente ou non cohérente d'échantillons de récurrences consécutives ; application du seuil de détection sur l'amplitude des différents évènements construits ; et création d'une détection lorsque cette amplitude est supérieure au seuil de détection appliqué.

- un bloc 26 d'intégration longue : ce bloc comporte un module de regroupement 32 et un module de filtrage cinématique 34.

Le module de regroupement 32, qui n'entre pas dans le périmètre de la présente invention, réalise un premier tri des détections afin de réduire la charge calculatoire réalisé par le module 34. Par exemple, suite à la création par le bloc 24 d'une nouvelle détection, le module de regroupement 32 effectue les tâches suivantes :

- La détection nouvellement créée, dénommée dans ce qui suit « détection pivot », est positionnée dans un repère commun. Le repère commun est un référentiel de regroupement commun aux N derniers balayages. Le centre de ce référentiel de regroupement évolue au cours du vol de l'aéronef pour rester assez proche de la position moyenne de l'antenne radar au moment des N balayages considérés.

- Les détections des N-1 balayages précédents, c'est-à-dire qui précèdent le balayage N auquel appartient la détection pivot, qui sont toutes positionnées dans le repère commun, sont triées selon leurs positions par rapport à la position de la détection pivot. Seules les détections qui ont une probabilité non nulle d'être compatibles avec la détection pivot sont alors regroupées dans un groupe de détections. Pour évaluer cette probabilité, on utilise un critère de regroupement rapide à calculer, tel que par exemple la distance entre la détection appartenant à un balayage précédent et la détection pivot et en regroupant les détections dont la distance est inférieure à une distance de référence.

Chaque détection regroupée det_i (i entier entre 1 et Q, qui est le nombre de détections du groupe de détections qui est associé à la détection pivot piv) est à ce stade caractérisée par :

- AZ_det_i, D_ det_i : coordonnées polaires, azimut et distance dans le repère commun de la détection det_i ; et,
- T_det_i : Date de l'acquisition de la détection det_i.

La détection pivot est quant à elle caractérisée par :

- AZ_piv, D_piv : coordonnées polaires, azimut et distance, dans le repère de regroupement de la détection pivot; et,
- T_piv : Date de l'acquisition de la détection pivot.

En sortie du module de regroupement 32, les détections det_i du groupe de détections associées à la détection pivot, et ladite détection pivot piv sont transmises au module de filtrage cinématique 34.

Le module de filtrage cinématique 34 met en oeuvre le procédé de détection selon l'invention, qui va maintenant être décrit en détail.

PRINCIPE GENERAL DU PROCEDE DE DETECTION

Dans le présent mode de réalisation, le module de filtrage cinématique s'appuie sur les coordonnées polaires des détections (c'est-à-dire les coordonnées d'azimut et de distance d'une détection) dans le repère commun de regroupement.

Le filtrage cinématique s'effectue sur la base d'un modèle de déplacement, qui est de préférence un modèle simple, tel que par exemple un modèle de mouvement rectiligne et uniforme, dénommé modèle MRU dans ce qui suit.

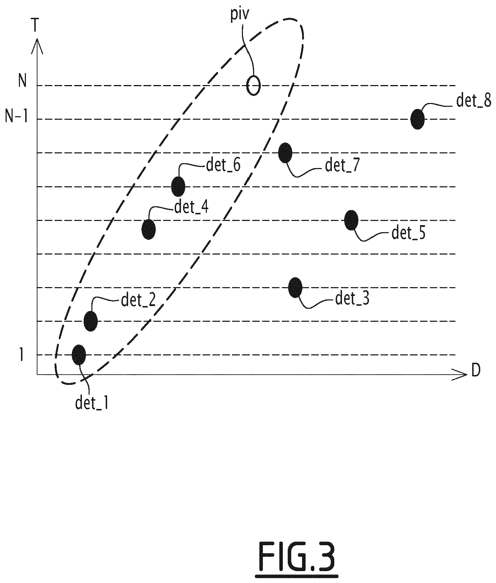

Le graphe de la figure 3 représente les détections det_i formées au cours de N-1 balayages successifs en fonction de leur coordonnée de distance D et regroupées avec la détection pivot piv du dernier balayage N. Le groupe de détections associées à la détection pivot comporte huit détections (Q=8).

Compte tenu du modèle MRU utilisé, on estimera qu'une détection det_i est cohérente avec la détection pivot piv lorsque ses coordonnées polaires évoluent linéairement avec le temps (à l'incertitude de mesure près). Ceci se traduit pas les relations suivantes :

[Math 1]

$$D\_det\_i = D\_piv + PD*(T\_det\_i - T\_piv) + \Delta AZ$$

[Math 2]

$$AZ\_det\_i = AZ\_piv + PAZ*(T\_det\_i - T\_piv) + \Delta D$$

Avec : PD le coefficient directeur ou pente pour la coordonnée de distance D et PAZ le coefficient directeur ou pente pour la coordonnée d'azimut AZ ; et ΔAz et ΔD, des variables aléatoires liées aux incertitudes de mesures sur les coordonnées respectivement d'azimut et de distance des détections pivot et regroupées. D'autres conventions, notamment de signe et/ou d'unité, peuvent être considérées pour définir la pente.

Cette recherche de linéarité s'effectue en exploitant les pentes entre chaque détection regroupée det_i et la détection pivot piv, et en identifiant celles qui sont identiques (aux incertitudes de mesure près). Les pentes sont ainsi données par les relations suivantes :

[Math 3]

$$PAZ\_i = (AZ\_det\_i - AZ\_piv)/(T\_det\_i - T\_piv)$$

[Math 4]

$$PD\_i = (D\_det\_i - D\_piv)/(T\_det\_i - T\_piv)$$

Selon le procédé de détection, dans le cas où K détections sont cohérentes entre elles (y compris la détection pivot, c'est-à-dire K-1 détections det_i et la détection pivot piv), un plot est créé, puis transmis à l'étage de pistage. Ceci est représenté sur la figure 3 par l'ellipse associant les détections det_1, det_2, det_4, det_6 et piv, K valant alors 5 pour qu'un plot soit créé.

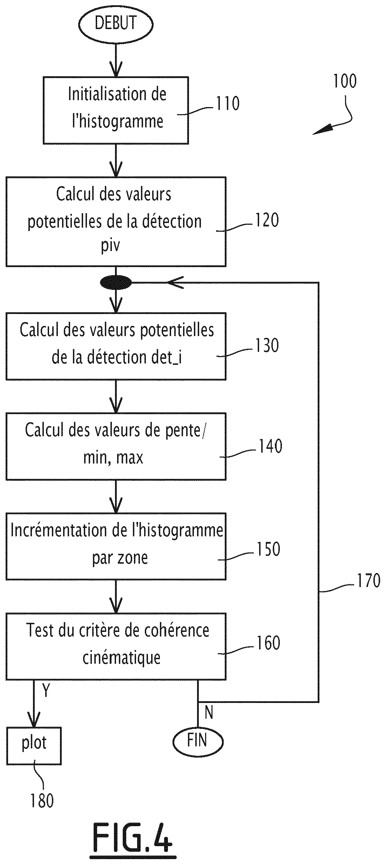

Le procédé de détection par intégration longue 100 selon l'invention est fondé sur l'utilisation d'un histogramme des valeurs potentielles H. Comme représenté sur la figure 4, il comprend les étapes suivantes :

- A l'étape 110, un histogramme H à deux dimensions est initialisé. Cet histogramme sera utilisé pour positionner chaque détection det_i selon une valeur de pente en azimut PAZ_i et une valeur de pente en distance PD J. Les caractéristiques de l'histogramme sont les suivantes (les valeurs numériques qui correspondent à une implémentation préférée sont données à titre d'exemple) :

  Nb_PAZ : nombre de classes de pente en azimut (par exemple 100) ;
  Nb_PD : nombre de classes de pente en distance (par exemple 100) ;
  PAZ_min : valeur minimale de la pente en azimut (par exemple -1°/s) ;
  PAZ_max : valeur maximale de la pente en azimut (par exemple 1 °/s) ;
  PD_min : valeur minimale de la pente en distance (par exemple -25 m/s) ; et,
  PD_max : valeur minimale de la pente en distance (par exemple 25 m/s).

Toutes les classes de cet histogramme sont initialisées à la valeur nulle.

- A l'étape 120, un intervalle de valeurs potentielles en azimut et un intervalle de valeurs potentielles en distance de la détection pivot sont calculés.

Dans cette étape, on cherche à déterminer, à partir des mesures d'azimut et de distance obtenues avec une certaine incertitude pour la détection pivot, les intervalles dans lesquels les valeurs vraies de ces deux grandeurs sont contenues avec un niveau de confiance donné. Ces intervalles sont dits intervalles de valeurs potentielles. Ils prennent la forme suivante :

- Intervalle de valeurs potentielles en azimut : [AZ_piv_min ; AZ_piv_max ]
  avec AZ_piv_min = AZ_piv - Tol_AZ et AZ_piv_max = AZ_piv + Tol_AZ, où AZ_piv est l'azimut mesuré de la détection pivot dans le repère commun et Tol_AZ la est la tolérance en azimut prenant en compte l'incertitude de mesure ;
- Intervalle de valeurs potentielles en distance : [D_piv_min ; D_piv_max ]
  avec D_piv_min = D_piv - Tol_D et D_piv_max = D_piv + Tol_D, où D_piv est la distance mesurée de la détection pivot dans le repère commun et Tol_D est la tolérance en distance prenant en compte l'incertitude de mesure.
- A l'étape 130, un intervalle de valeurs potentielles en azimut et un intervalle de valeurs potentielles en distance sont calculés pour chaque détection regroupée det_i du groupe associé à la détection pivot.

Comme ci-dessus pour la détection pivot, pour la détection regroupée det_i, les intervalles de valeurs possibles prennent la forme suivante :

- Intervalle de valeurs potentielles en azimut : [AZ_det_i_min ; AZ_det_i_max ]
  avec AZ_det_i_min = AZ_det_i - Tol_AZ et AZ_ det_i_max = AZ_det_i + Tol_AZ, où AZ_I est l'azimut mesuré de la détection det_i dans le repère de regroupement et Tol_AZ est la tolérance en azimut ;
- Intervalle de valeurs potentielles en distance : [D_det_i_min ; D_det_i_max ]
  avec D_ det_i_min = D_det_i - Tol_D et D_ det_i_max = D_det_i + Tol_D, où D_det_i est la distance mesurée de la détection det_i dans le repère commun et Tol_D est la tolérance en distance.

Il existe plusieurs approches pour calculer les tolérances, par exemple en fixant des valeurs de tolérance arbitraires ou en les calculant pour qu'elles correspondent mieux aux mesures. Il peut également être tenu compte de l'effet sur la tolérance du regroupement des différentes détections dans le repère commun.

De même, il est possible d'ajuster les tolérances afin de régler la rigidité cinématique du traitement. Plus les tolérances seront importantes plus le traitement pourra détecter des cibles dont le mouvement s'écarte du mouvement rectiligne uniforme du modèle cinématique utilisé.

Un exemple de calcul des tolérances est donné ci-dessous.

Les incertitudes des mesures viennent de l'incertitude de mesure propre au radar, gaussienne par hypothèse, caractérisée de façon usuelle par les écarts-types respectivement en azimut St_AZ et en distance St_D.

Dans le présent mode de réalisation, on choisit de définir les intervalles avec un niveau de confiance de 95%. Compte tenu de la modélisation gaussienne, cela correspond à des tolérances sur la mesure radar de :

[Math 5]

$$Tol\_AZ = 2 \times St\_AZ$$

[Math 6]

$$Tol\_D = 2 \times St\_D$$

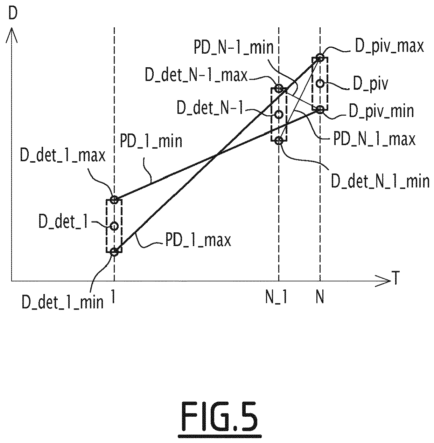

La figure 5 illustre les étapes 120 et 130 de détermination, pour la coordonnée de distance, d'un intervalle de valeurs possibles pour la détection pivot, la détection det_1 et la détection det_N-1.

- A l'étape 140, des valeurs de pente sont calculées. Pour ce faire, à partir des intervalles de valeurs potentielles, on calcule les pentes minimales et maximales pour chaque couple détection pivot/détection regroupée. La figure 5 illustre l'étape 140 pour la coordonnée de distance.

Ainsi, pour un couple associant la détection pivot et la détection regroupée det_i, quatre valeurs extrêmes de pentes sont déterminées :

[Math 7]

$$PAZ\_ii\_min = (AZ\_det\_i\_max - AZ\_piv\_min))/(T\_det\_i - T\_piv )$$

[Math 8]

$$PAZ\_i\_max = (AZ\_det\_i\_min - AZ\_piv\_max)/(T\_det\_i - T\_piv)$$

[Math 9]

$$PD\_i\_min = (D\_det\_i\_max - D\_piv\_min)/(T\_det\_i - T\_piv)$$

[Math 10]

$$PD\_i\_max = (D\_det\_i\_min - D\_piv\_max)/(T\_det\_i - T\_piv)$$

- A l'étape 150, l'histogramme H est incrémenté par zone de classes. Plus précisément, on calcule les index minimal et maximal respectivement en azimut et en distance des classes de l'histogramme qui correspondent aux quatre valeurs extrêmes des pentes déterminées à l'étape 140 :

[Math 11]

$$clAZ\_i\_min= E( Nb\_PAZ \times (PAZ\_i\_min - PAZ\_min )) / (PAZ\_max - PAZ\_min))$$

[Math 12]

$$clAZ\_i\_max = E( Nb\_PAZ \times (PAZ\_i\_max - PAZ\_min )) / (PAZ\_max - PAZ\_min))$$

[Math 13]

$$clD\_i\_min = E( Nb\_PD \times (PD\_i\_min - PD\_min )) / (PD\_\ max - PD\_min))$$

[Math 14]

$$clD\_i\_max = E( Nb\_PD \times (PD\_i\_max - PD\_min )) / (PD\_\ max - PD\_min))$$

où la fonction E() correspond à la fonction « partie entière ».

L'index clAZ en azimut et l'index clD en distance sont limités pour être compris entre zéro et NB_PD - 1 (respectivement zéro et NB_PAZ - 1).

Toutes les classes dont l'index en azimut et l'index en distance sont compris entre les index minimaux et maximaux sont « possibles » puisqu'elles correspondent à des positions potentielles de la cible. En conséquence, l'étape 150 consiste à incrémenter l'ensemble des classes (clAZ, clD) de l'histogramme vérifiant :

[Math 15]

$$clAZ\_i\_min \leq clAZ \leq clAZ\_i\_max \text{ et } clD\_i\_min \leq clD \leq clD\_i\_max,$$

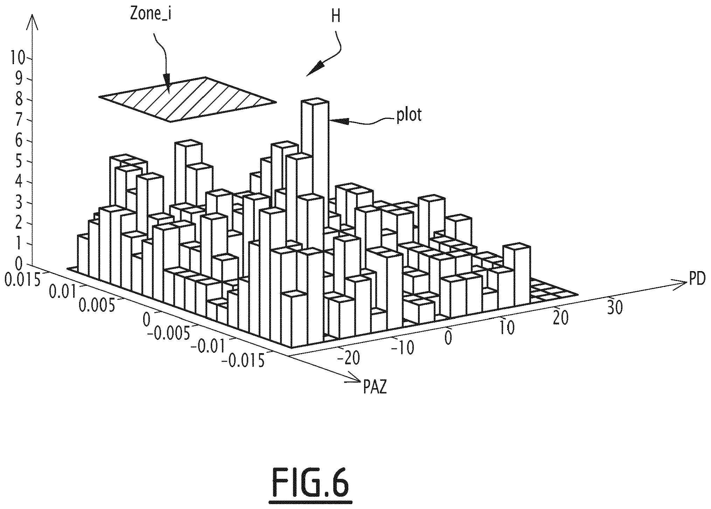

c'est-à-dire les classes d'une zone (zone_i sur la figure 6) délimitée par les index clAZ_i_min et clAZ_i_max et azimut clD_i_min et clD_i_max en distance.

Cette incrémentation par zone est illustrée sur la figure 6.

- A l'étape 160, un critère de cohérence cinématique est testé. Ce critère est de préférence le suivant : si une classe de l'histogramme contient K-1 éléments alors un plot est formé à étape 180. Cela signifie en effet que K-1 détections sont potentiellement alignées avec la détection pivot, et donc que K détections sont cohérentes cinétiquement.

- A l'étape 170, si le critère de cohérence n'est pas vérifié, le procédé 100 boucle à l'étape 130 pour la prise en compte de la détection det_i suivante dans le groupe de détections associé à la détection pivot. Si toutes les détections du groupe ont été traitées sans qu'un plot n'ait été créé, le procédé se termine.

Le procédé selon l'invention qui met en oeuvre une incrémentation par zone présente les avantages suivants :

- la cohérence cinématique est vérifiée strictement puisque toutes les classes incrémentées correspondent aux valeurs potentiellement vraies de la position du réflecteur.

- le procédé prend en compte naturellement la distribution statistique des valeurs de pentes selon la date de la détection regroupée (plus la détection est proche temporellement de la détection pivot, plus l'incertitude sur la valeur de la pente est grande).
- Le procédé est doté d'une complexité calculatoire linéaire, ce qui permet une exécution plus rapide que les alternatives connues.

VARIANTES

Ce procédé de détection peut être mis en oeuvre en caractérisant les détections autrement que par leurs coordonnées polaires, par exemple par leurs coordonnées cartésiennes.

Ce procédé de détection peut être mis en oeuvre en caractérisant les détections au moyen d'une seule coordonnée, par exemple de distance. Dans ce cas, les étapes de calcul sont les mêmes que celles décrites précédemment mais en se limitant à la seule coordonnée de distance. L'histogramme des valeurs potentielles est alors un histogramme à une dimension, à savoir la pente en distance. L'avantage de cette mise en oeuvre est une très grande rapidité d'exécution.

Ce procédé de détection peut être mis en oeuvre en caractérisant chaque détection au moyen d'une ou plusieurs coordonnées de vitesse, par exemple la vitesse radiale du réflecteur lorsque le radar utilisé fonctionne en mode Doppler. De préférence, chaque détection est également caractérisée au moyen d'un ou plusieurs coordonnées de position, par exemple en azimut et de la distance. La recherche d'une cohérence cinématique s'effectue alors sur un histogramme à trois dimensions (une coordonnée de vitesse radiale et deux coordonnées de position). Le calcul des classes à incrémenter pour les coordonnées de pente en azimut (qui est analogue à vitesse azimutale) et de pente en distance (qui est analogue à une vitesse d'éloignement) est identique à celui décrit précédemment. Pour la vitesse radiale, les classes doivent être liées directement au paramètre et non à la pente de ce paramètre, puisque la vitesse radiale est déjà une vitesse. Des étapes similaires à ce qui a été présenté ci-dessus sont mises en oeuvre :
Initialisation de l'histogramme selon la dimension vitesse radiale :

- NB_VR : nombre de classes de vitesse radiale. Par exemple 100
- VR_MIN et VR_MAX : vitesses radiales correspondant aux classes extrêmes. Par exemple -25 et 25 m/s.

Calcul des valeurs potentielles en vitesse : [VR_det_i - Tol_VR ; V_det_i + Tol_V]
où VR_det_i est la vitesse radiale mesurée pour la détection det_i et tol_VR est la tolérance sur la vitesse radiale. La valeur de la tolérance est à fixer selon les choix d'implémentation. Par exemple Tol_VR = 4 x St_VR où St_VR est une incertitude de mesure sur la vitesse radiale.

Index maximal et minima des classes :

[Math 16]

$$clVR\_i\_min = E(\ NB\_VR \times (VR\_det\_i - Tol\_VR - VR\_MIN)/(VR\_MAX - VR\_MIN))$$

[Math 17]

$$clVR\_i\_max = E(\ NB\_VR \times (VR\_det\_i + Tol\_VR - VR\_MIN)/(VR\_MAX - VR\_MIN))$$

Les classes de la zone zone_i de l'histogramme 3D dont les index (clAZ, clD, clVR) vérifient les contraintes suivantes sont incrémentées d'une unité :

[Math 18]

$$clAZ\_i\_min \leq clAZ \leq clAZ\_i\_max$$

et

clD_i_min ≤ clD ≤ clD_i_max
et
clVR_i_min ≤ clVR ≤ clAR_i_max

Les entiers N et K sont des paramètres ajustables en fonction de la situation opérationnelle, en particulier, l'état de mer.

**Revendications**

1. Procédé de détection par intégration longue (100) mis en oeuvre par un système radar (10) pour la détection de cibles, le système radar étant propre à délivrer des mesures selon au moins une coordonnée, ledit procédé prenant en entrée une pluralité de détections résultant d'une pluralité de N balayages successifs d'un même espace par le système radar, et identifiant, parmi ladite pluralité de détections, les détections associées à une même cible par application d'un critère de filtrage cinématique fondé sur un modèle cinématique de mouvement selon lequel les cibles ont un mouvement rectiligne uniforme, **caractérisé en ce que** ledit procédé est mis en oeuvre à chaque nouvelle détection, dénommée détection pivot (piv), et comporte les étapes consistant à :

   - regrouper, avec la détection pivot (piv), une pluralité de détections regroupées (det_i) parmi la pluralité de détections, une détection regroupée étant une détection qui appartient à un des N-1 balayages précédant le balayage N de la détection pivot et qui a une probabilité non nulle selon un critère de regroupement associant la détection pivot et la détection considérée ;
   - filtrer cinématiquement les détections regroupées (det_i) pour associer les détections regroupées qui sont strictement cohérentes cinématiquement avec la détection pivot, en :
   - Initialisant (110) un histogramme (H), chaque dimension de l'histogramme étant une variation temporelle d'une coordonnée correspondante mesurée par système radar ;

      - Calculant (120) un intervalle de valeurs potentielles pour la ou chaque coordonnée de la détection pivot ;

   puis, pour chaque détection regroupée, en :

      - Calculant (130) un intervalle de valeurs potentielles pour la ou chaque coordonnée de la détection regroupée considérée ;
      - Calculant (140) une variation temporelle minimale et une variation temporelle maximale à partir des intervalles de valeurs potentielles de la détection pivot et de la détection regroupée considérée pour la ou chaque coordonnée mesurée par système radar ;
      - Incrémentant (150) l'ensemble des classes de l'histogramme dont l'index selon chaque dimension se situe entre les variations temporelles minimale et maximale calculées ; et,
      - Testant (160) un critère de cohérence cinématique selon lequel une cible est détectée dès qu'au moins une classe de l'histogramme atteint une valeur prédéfinie (K-1).

2. Procédé selon la revendication 1, dans lequel, lorsque ladite au moins une coordonnée que le système radar mesure comporte une position, la variation temporelle correspondante est une pente ; et, lorsque ladite au moins une coordonnée que le système radar mesure comporte une vitesse, la variation temporelle correspondante est une vitesse.

3. Procédé selon la revendication 2, dans lequel, lorsque ladite position est une position en azimut, la variation temporelle est une pente en azimut ; et, lorsque ladite position est une position en distance, la variation temporelle est une pente en distance.

4. Procédé selon l'une quelconque des revendications 1 à 3, dans lequel le critère de regroupement associant la détection pivot et la détection considérée est la distance entre la détection pivot et la détection considérée, les détections dont la distance est inférieure à une distance de référence étant regroupées avec la détection pivot.

5. Procédé selon l'une quelconque des revendications 1 à 4, dans lequel la cible est une petite cible.

6. Système radar (10), **caractérisé en ce qu'**il comporte un étage d'analyse (16) propre à mettre en oeuvre un procédé de détection par intégration longue selon l'une quelconque des revendications 1 à 5.

7. Système radar (10) selon la revendication 6, comportant une antenne radar (12) tournante ou à balayage électronique.

8. Système radar (10) selon la revendication 6 ou la revendication 7, destiné à être embarqué sur une plateforme, le système radar étant mobile.

9. Système radar (10) selon l'une quelconque des revendications 6 à 8, dédié à la surveillance maritime.

**Patentansprüche**

1. Erfassungsverfahren durch lange Integration (100), das von einem Radarsystem (10) zur Erfassung von Zielen durchgeführt wird, wobei das Radarsystem geeignet ist, um Messungen gemäß mindestens einer Koordinate bereitzustellen, wobei das Verfahren als Eingang eine Vielzahl von Erfassungen verwendet, die aus einer Vielzahl von N aufeinanderfolgenden Abtastungen desselben Raums durch das Radarsystem resultieren, und unter der Vielzahl von Erfassungen jene Erfassungen identifiziert, die mit demselben Ziel assoziiert sind, durch Anwendung eines kinematischen Filterkriteriums, das auf einem kinematischen Bewegungsmodell beruht, nach dem die Ziele eine geradlinige, gleichmäßige Bewegung aufweisen, **dadurch gekennzeichnet, dass** das Verfahren bei jeder neuen Erfassung, die als Pivot-Erfassung (piv) bezeichnet wird, durchgeführt wird und die Schritte umfasst, die aus Folgendem bestehen:

    - Gruppieren, mit der Pivot-Erfassung (piv), einer Vielzahl von gruppierten Erfassungen (det_i) aus der Vielzahl von Erfassungen, wobei eine gruppierte Erfassung eine Erfassung ist, die zu einer der N-1 Abtastungen gehört, die der Abtastung N der Pivot-Erfassung vorausgehen, und die eine von Null verschiedene Wahrscheinlichkeit gemäß einem Gruppierungskriterium aufweist, das die Pivot-Erfassung und die betrachtete Erfassung assoziiert;
    - kinematisches Filtern der gruppierten Erfassungen (det_i), um die gruppierten Erfassungen zu assoziieren, die kinematisch strikt mit der Pivot-Erfassung kohärent sind, in:
    - Initialisieren (110) eines Histogramms (H), wobei jede Dimension des Histogramms eine zeitliche Veränderung einer entsprechenden Koordinate ist, die von einem Radarsystem gemessen wird;

        - Berechnen (120) eines Intervalls von potenziellen Werten für die oder jede Koordinate der Pivot-Erfassung;

    und dann für jede gruppierte Erfassung in:

        - Berechnen (130) eines Intervalls potenzieller Werte für die oder jede betrachtete Koordinate der gruppierten Erfassung;
        - Berechnen (140) einer minimalen Zeitvariation und einer maximalen Zeitvariation aus den Intervallen potenzieller Werte der Pivot-Erfassung und gruppierten Erfassung für die oder jede von einem Radarsystem gemessene Koordinate;
        - Inkrementieren (150) der Menge der Histogrammklassen, deren Index nach jeder Dimension zwischen den berechneten minimalen und maximalen zeitlichen Veränderungen liegt; und,
        - Testen (160) eines kinematischen Kohärenzkriteriums, wonach ein Ziel erfasst wird, sobald mindestens eine Klasse des Histogramms einen vordefinierten Wert (K-1) erreicht.

2. Verfahren nach Anspruch 1, wobei, wenn die mindestens eine Koordinate, die das Radarsystem misst, eine Position umfasst, die entsprechende zeitliche Veränderung eine Steigung ist; und, wenn die mindestens eine Koordinate, die das Radarsystem misst, eine Geschwindigkeit umfasst, die entsprechende zeitliche Veränderung eine Geschwindigkeit ist.

3. Verfahren nach Anspruch 2, wobei, wenn die Position eine Azimutposition ist, die zeitliche Änderung eine Azimutsteigung ist; und, wenn die Position eine Abstandsposition ist, die zeitliche Änderung eine Abstandssteigung ist.

4. Verfahren nach einem der Ansprüche 1 bis 3, wobei das Gruppierungskriterium, das die Pivot-Erfassung und die betrachtete Erfassung assoziiert, der Abstand zwischen der Pivot-Erfassung und der betrachteten Erfassung ist, wobei die Erfassungen, deren Abstand kleiner ist als ein Referenzabstand, mit der Pivot-Erfassung gruppiert wird.

5. Verfahren nach einem der Ansprüche 1 bis 4, wobei das Ziel ein kleines Ziel ist.

6. Radarsystem (10), **dadurch gekennzeichnet, dass** es eine Analysestufe (16) umfasst, die geeignet ist, ein Erfassungsverfahren durch lange Integration nach einem der Ansprüche 1 bis 5 durchzuführen.

7. Radarsystem (10) nach Anspruch 6, umfassend eine drehbare oder elektronisch abtastende Radarantenne (12).

8. Radarsystem (10) nach Anspruch 6 oder Anspruch 7, das dazu bestimmt ist, an Bord einer Plattform zu sein, wobei das Radarsystem mobil ist.

9. Radarsystem (10) nach einem der Ansprüche 6 bis 8, das der Meeresüberwachung gewidmet ist.

**Claims**

1. A long integration detection method (100) implemented by a radar system (10) for detecting targets, the radar system being able to deliver measurements along at least one coordinate, said method using, as input, a plurality of detections resulting from a plurality of N successive sweeps of a same space by the radar system, and identifying, among said plurality of detections, the detections associated with a same target by applying a kinematic filtering criterion based on a kinematic movement model according to which the targets have a uniform rectilinear movement, **characterized in that** said method is implemented upon each new detection, called pivot detection (piv), and includes the steps consisting of:

   - grouping together, with the pivot detection (piv), a plurality of grouped detections (det_i) among the plurality of detections, a grouped detection being a detection that belongs to one of the N-1 sweeps preceding the sweep N of the pivot detection and which has a non-nil likelihood according to a grouping criterion associating the pivot detection and the considered detection;
   - kinematically filtering the grouped detections (det_i) in order to associate the grouped detections that are strictly kinematically coherent with the pivot detection, by:
   - Initializing (110) a histogram (H), each dimension of the histogram being a temporal variation of a corresponding coordinate measured by the radar system;

      - Calculating (120) an interval of potential values for the or each coordinate of the pivot detection;

   then, for each grouped detection, by:

      - Calculating (130) an interval of potential values for the or each coordinate of the considered grouped detection;
      - Calculating (140) a minimal temporal variation and a maximal temporal variation from intervals of potential values of the pivot detection and the considered grouped detection for the or each coordinate measured by radar systems;
      - Incrementing (150) each class of the histogram whose index along each dimension is located between the calculated minimal and maximal temporal variations; and
      - Testing (160) a kinematic coherence criterion according to which a target is detected once at least one class of the histogram reaches a predefined value (K-1).

2. The method according to claim 1, wherein, when said at least one coordinate that the radar system measures includes a position, the corresponding temporal variation is a slope; and when said at least one coordinate that the radar system measures includes a speed, the corresponding temporal variation is a speed.

3. The method according to claim 2, wherein, when said position is an azimuth position, the temporal variation is an azimuth slope; and, when said position is a distance position, the temporal variation is a distance slope.

4. The method according to any one of claims 1 to 3, wherein the grouping criterion associating the pivot detection and the considered detection is the distance between the pivot detection and the considered detection, the detections whose distance is smaller than a reference distance being grouped together with the pivot detection.

5. The method according to any one of claims 1 to 4, wherein the target is a small target.

6. A radar system (10), **characterized in that** it includes an analysis stage (16) suitable for implementing a long integration detection method according to any one of claims 1 to 5.

7. The radar system (10) according to claim 6, including a mechanically-scanned antenna or electronically-scanned antenna (12).

8. The radar system (10) according to claim 6 or claim 7, suitable for being embedded on a platform, the radar system being mobile.

9. The radar system (10) according to any one of claims 6 to 8, dedicated to maritime surveillance.

FIG.1

## FIG.2

FIG.3

FIG.4

## FIG.5

FIG.6

**EP 3 657 200 B1**

**RÉFÉRENCES CITÉES DANS LA DESCRIPTION**

**Documents brevets cités dans la description**

*   FR 2974421